# EUROPÄISCHE PATENTSCHRIFT

(11) **EP 3 309 009 B1**
(45) Veröffentlichungstag und Bekanntmachung des Hinweises auf die Patenterteilung: **08.07.2020**
(21) Anmeldenummer: 17196442.2
(22) Anmeldetag: 13.10.2017
(51) Int. Cl.: B60P 3/38

(54) **INNENAUSBAUVORRICHTUNG**
INTERNAL FITTING DEVICE
DISPOSITIF DE CONSTRUCTION D'INTÉRIEUR

(30) Priorität: 14.10.2016 DE 202016105772 U
(43) Veröffentlichungstag der Anmeldung: 18.04.2018
(73) Patentinhaber: Scolotech GmbH, 88709 Meersburg (DE)
(72) Erfinder: Schuler, Kar-Heinz, 88255 Köpfingen über Baienfurt (DE)
(74) Vertreter: Daub, Thomas

(56) Entgegenhaltungen:
- EP-A1- 2 532 569
- DE-U1-202006 005 724
- FR-A1- 2 397 175
- US-A1- 2008 164 724

## Beschreibung

### Stand der Technik

Die Erfindung betrifft eine Innenausbauvorrichtung insbesondere für ein Wohnmobil. Eine gattungsgemäße Innenausbauvorrichtung ist in der EP 2 532 569 A1 offenbart.

Es ist bereits eine Innenausbauvorrichtung, insbesondere für ein Wohnmobil, mit zumindest einem hochgelegenem Bettbereich und wenigstens einem an dem zumindest einen Bettbereich grenzenden Gangbereich und mit einem Stufenmodul, das zumindest teilweise in dem Gangbereich angeordnet und dazu vorgesehen ist, zumindest eine erhöhte Trittfläche zum Aufstieg in den Bettbereich bereitzustellen, vorgeschlagen worden.

Die Aufgabe der Erfindung besteht insbesondere darin, eine gattungsgemäße Vorrichtung mit verbesserten Eigenschaften hinsichtlich eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Innenausbauvorrichtung gemäß dem Oberbegriff des Anspruchs 1.

Es wird vorgeschlagen, dass die Innenausbauvorrichtung zumindest ein Betterweiterungselement umfasst, das dazu vorgesehen ist, zwischen einer Verstaustellung und einer Gebrauchsstellung verstellt zu werden, und bei einer Verstellung des Stufenmoduls in eine ausgefahrene Stellung zumindest teilweise mitgenommen zu werden, wobei das Stufenmodul dazu vorgesehen ist, in eine eingefahrene Stellung verfahren zu werden, während das Betterweiterungselement in der Gebrauchsstellung angeordnet ist. Unter einem "hochgelegenen Bettbereich" soll dabei insbesondere ein Bettbereich verstanden werden, der von einem Fußboden, insbesondere von dem Fußboden des Wohnmobils aus gesehen, erhöht angeordnet ist und vorzugsweise zumindest eine Höhe von 0,3m, vorteilhaft von zumindest 0,5m, in einer bevorzugten Ausgestaltung zumindest 1 m und besonders bevorzugt zumindest 1,3 m aufweist. Dabei weist der Bettbereich vorzugsweise eine gepolsterte Liegefläche auf, die vorzugsweise Platz für zumindest eine ausgewachsene liegende Person bietet. Vorzugsweise weist die Innenausbauvorrichtung zwei hochgelegene Bettbereiche auf, die zumindest teilweise von dem Gangbereich voneinander beabstandet sind. Dabei sind die beiden Bettbereiche vorzugsweise in einem Fuß- und Mittelbereich durch den Gangbereich voneinander beabstandet. In einem Kopfbereich sind die beiden Bettbereiche vorzugsweise miteinander verbunden, wobei es grundsätzlich auch sein kann, dass die Bettbereiche auch in dem Kopfbereich zumindest teilweise voneinander getrennt ausgebildet sind. Ein Bettbereich weist dabei vorzugsweise zumindest ein, als Matratze ausgebildetes Komfortelement, das eine Liegefläche des Bettbereichs ausbildet und einen Unterbau auf, der das Komfortelement über ein Gestell auf dem Kabinenboden befestigt. In dem Unterbau können dabei weitere Funktionseinheiten der Innenausbauvorrichtung angebracht werden. Unter einem "Gangbereich" soll dabei insbesondere ein Bereich, insbesondere ein Bereich des Wohnmobils, verstanden werden, der einen Gang für Personen ausbildet, um sich insbesondere in dem Inneren des Wohnmobils fortzubewegen, wobei der Gangbereich dabei vorzugsweise einen ebenen Fußboden aufweist. Darunter, dass der Gangbereich an den Bettbereich "angrenzt", soll dabei insbesondere verstanden werden, dass es zwischen dem Bettbereich und dem Gangbereich nur eine kleine, vorzugsweise keine räumliche Trennung gibt und der Bettbereich unmittelbar benachbart zu dem Gangbereich liegt, sodass eine Person insbesondere unmittelbar von dem Gangbereich in den Bettbereich gelangen kann und umgekehrt. Unter einem "Stufenmodul" soll dabei insbesondere ein Modul verstanden werden, das zumindest eine Stufe aufweist, die eine Trittfläche für eine Person bereitstellt. Dabei weist das Stufenmodul vorzugsweise zumindest zwei unterschiedlich hohe Stufen auf. Unter einer "erhöhten Trittfläche" soll dabei insbesondere eine gegenüber einem Fußboden des Wohnmobils erhöhte Trittfläche verstanden werden, über die eine Person in höher gelegene Bereiche des Wohnmobils gelangen kann. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "unterschiedlichen Aufstiegspositionen" sollen dabei insbesondere zwei unterschiedliche räumliche Stellungen des Stufenmoduls insbesondere innerhalb des Gangbereichs verstanden werden, wobei das Stufenmodul in den unterschiedlichen Aufstiegspositionen unterschiedliche horizontale und/oder vertikale Stellungen einnehmen kann. Dadurch kann das Stufenmodul für unterschiedliche Situationen unterschiedliche Trittbereiche für eine Person bereitstellen.

Weiter wird vorgeschlagen, dass das Stufenmodul zumindest in dem Gangbereich zumindest zwischen einer eingefahrenen Stellung und einer ausgefahrenen Stellung relativ zu dem Bettbereich verschiebbar ist. Unter einer "eingefahrenen Stellung" soll dabei insbesondere eine Grundstellung des Stufenmoduls verstanden werden, die das Stufenmodul in einem gewöhnlichen Betrieb innerhalb des Wohnmobils einnimmt. Dabei sind in der eingefahrenen Stellung insbesondere andere Module innerhalb des Wohnmobils, insbesondere Module, die in oder an dem Gangbereich angeordnet sind, wie beispielsweise Verstaumodule, voll einsatzfähig. Das Stufenmodul ist in der eingefahrenen Stellung vorzugsweise möglichst platzsparend in dem Gangbereich angeordnet. Das Stufenmodul kann in der eingefahrenen Stellung von einer Person als erhöhte Trittfläche voll genutzt werden. Unter einer "ausgefahrenen Stellung" soll eine weitere Stellung des Stufenmoduls verstanden werden, die das Stufenmodul in einem Betrieb innerhalb des Wohnmobils einnehmen kann, um eine von der eingefahrenen Stellung unterschiedliche Aufstiegsposition bereitzustellen, wobei das Stufenmodul insbesondere in dem Gangbereich im Gegensatz zu der eingefahrenen Stellung zumindest teilweise in einer anderen Position angeordnet ist. Unter "verschiebbar" soll dabei insbesondere entlang einer Verschiebeachse oder Verschiebebahn beweglich verstanden werden, wobei zur Verschiebung des Stufenmoduls vorzugsweise Lagerelemente vorhanden sind, die das Stufenmodul gegenüber dem Gangbereich und/oder gegenüber dem Bettbereich lagern. Die Lagerelemente sind dabei beispielsweise als Rollen oder als Führungsschienen ausgebildet. Dadurch kann besonders vorteilhaft erreicht werden, dass durch das Stufenmodul in dem Gangbereich verschiedene Aufstiegspostionen möglich sind.

Ferner wird vorgeschlagen, dass das Stufenmodul dazu vorgesehen ist, linear verschoben zu werden. Unter "linear verschoben" soll dabei insbesondere entlang einer Führungsbahn, vorzugsweise einer geraden Führungsbahn verschoben verstanden werden. Grundsätzlich wäre es auch denkbar, dass das Stufenmodul entlang einer gekrümmten Führungsbahn verschoben werden kann. Dadurch kann das Stufenmodul besonders einfach gelagert werden.

Es wird weiterhin vorgeschlagen, dass das Stufenmodul dazu vorgesehen ist, zwischen der eingefahrenen Stellung und der ausgefahrenen Stellung um zumindest 100 mm verschoben zu werden. Unter "zumindest 100 mm" soll dabei insbesondere um zumindest 100 mm, bevorzugt um zumindest 200, vorzugsweise um 400 mm und in einer besonders vorteilhaften Ausgestaltung um 600 mm verstanden werden. Dadurch können besonders vorteilhaft unterschiedliche Aufstiegspositionen erreicht werden.

Unter einem "Betterweiterungselement" soll dabei insbesondere ein separat ausgebildetes Element verstanden werden, das in einem montierten Zustand einen Bettbereich erweitert und/oder zwei Bettbereiche zumindest teilweise miteinander verbindet. Unter einem "Betterweiterungselement" soll dabei insbesondere ein Element verstanden werden, das dazu vorgesehen ist, in dem Gangelement angeordnet zu werden und die beiden durch den Gangbereich voneinander getrennten Bettbereiche zumindest in einem Teilbereich miteinander zu verbinden. Dadurch kann vorzugsweise ein großer Bettbereich erreicht werden, der einfach zumindest teilweise zusammen mit dem Stufenmodul ausgefahren werden kann.

Weiterhin wird vorgeschlagen, dass die Innenausbauvorrichtung zumindest ein mit dem Stufenmodul verbundenes seitliches Wandelement aufweist, das sich über das Stufenmodul erstreckt und das zumindest ein Handgriffelement aufweist, über welches das Stufenmodul verschiebbar ist. Unter einem "seitlichen Wandelement" soll dabei insbesondere ein Element verstanden werden, das sich an einer Seite des Stufenmoduls über die Stufen des Stufenmoduls erstreckt und so insbesondere einen von dem Boden in einer ergonomisch einfach zu erreichenden Höhe angeordneten Bereich für einen Benutzer bereitstellt, an dem er das Stufenmodul bedienen und insbesondere zwischen der eingefahrenen Stellung und der ausgefahrenen Stellung verschieben kann. Unter einem "Handgriffelement" soll dabei insbesondere ein Element verstanden werden, das dazu vorgesehen ist, dass eine Person dieses einfach mittels einer Hand betätigen und/oder ergreifen kann, um das seitliche Wandelement und dadurch das Stufenmodul bewegen zu können.

Dadurch kann das Stufenmodul besonders einfach in einer ergonomisch vorteilhaften Höhe von einem Benutzer bedient bzw. ergriffen werden.

Außerdem wird vorgeschlagen, dass die Innenausbauvorrichtung zumindest ein Verriegelungsmodul aufweist, über das das Stufenmodul zumindest in der eingefahrenen Stellung und der ausgefahrenen Stellung betriebssicher verriegelbar ist. Unter einem "Verriegelungsmodul" soll dabei insbesondere ein Modul verstanden werden, das ein anderes Modul, wie insbesondere das Stufenmodul, in wenigstens einer Stellung verriegelt und zu einem anderen Element, wie insbesondere dem Kabinenboden, ortsfest fixiert. Das Verriegelungsmodul weist dabei vorzugsweise zumindest ein Form- und/oder Kraftschlusselement auf, das das Stufenmodul mit dem Kabinenboden oder einem anderen zu dem Kabinenboden fixierten Bauteil der Innenausbauvorrichtung, wie beispielsweise einem Teil des Bettbereichs, des Gangbereichs oder eines Schrankbereichs, in zumindest einem verriegelten Zustand form- und/oder kraftschlüssig miteinander verbindet. In einem nicht verriegelten Zustand des Verriegelungsmoduls kann das Stufenmodul zumindest zwischen seiner eingefahrenen und seiner ausgefahrenen Position verstellt werden. Dadurch kann das Stufenmodul in den beiden Stellungen vorteilhaft verriegelt werden und so kann ein sicherer Aufstieg über das Stufenmodul gewährleistet werden.

Es wird weiter vorgeschlagen, dass das Verriegelungsmodul wenigstens ein Betätigungselement zur Entriegelung des Stufenmoduls aufweist, das an dem seitlichen Wandelement angebracht ist. Unter einem "Betätigungselement" soll dabei insbesondere ein Element verstanden werden, das von einer Person betätigt werden kann, um das Verriegelungsmodul zwischen einer Verriegelstellung und einer Entriegelstellung verstellen zu können. Dabei ist es denkbar, dass das Verriegelungsmodul durch die Verstellung über das Betätigungselement jeweils in der Verriegelstellung oder Entriegelstellung bleibt oder dass das Verriegelungsmodul lediglich während der Betätigung über das Betätigungsmodul von der Verriegelstellung in die Entriegelstellung gebracht wird. Dadurch kann das Verriegelungsmodul besonders einfach betätigt werden.

Zudem wird vorgeschlagen, dass der Gangbereich einen Schrankbereich ausbildet, in den das Stufenmodul in der eingefahrenen Stellung nicht hineinragt. Unter einem "Schrankbereich" soll dabei insbesondere ein Bereich des Gangbereichs verstanden werden, in den Abdeckelemente, wie insbesondere Türen oder Schubladen, in einem geöffneten Zustand eines Schranks hineinragen. Dadurch können Aufbewahrungsvorrichtungen, wie Schränke oder Schubladen, die zumindest teilweise unterhalb der Bettbereiche angeordnet sind, vorteilhaft zugänglich ausgebildet werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Innenausbauvorrichtung mit einem Stufenmodul in der eingefahrenen Stellung,
- Fig. 2: eine schematische Darstellung der Innenausbauvorrichtung mit dem Stufenmodul in einer ausgefahrenen Stellung und einem Betterweiterungselement in einer Gebrauchsstellung.

### Beschreibung des Ausführungsbeispiels

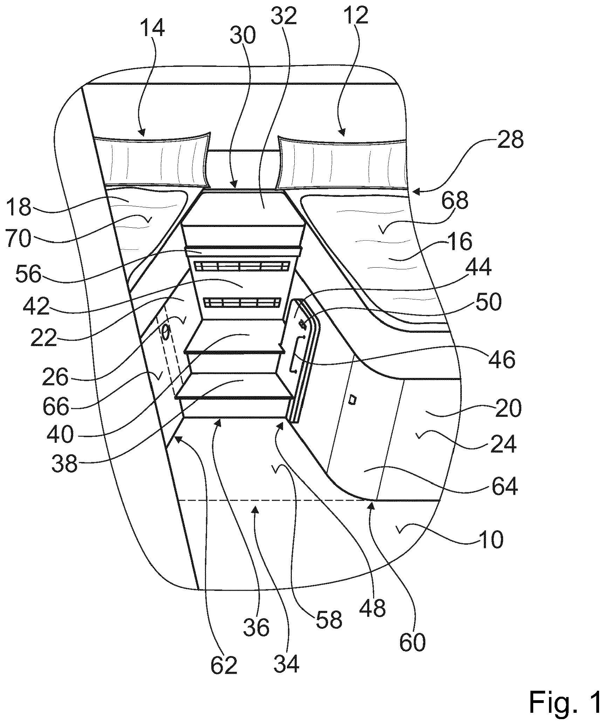

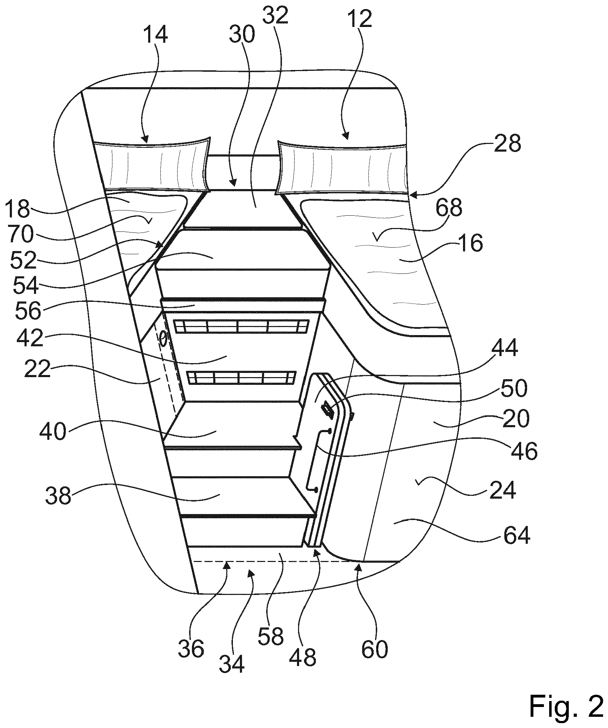

Die Figuren 1 und 2 zeigen eine erfindungsgemäße Innenausbauvorrichtung. Die Innenausbauvorrichtung ist Teil eines nicht näher dargestellten Wohnmobils. Die Innenausbauvorrichtung kann alternativ auch in einem Wohnwagen und/oder einem Kastenwagen vorgesehen sein. Das Wohnmobil weist eine Wohnkabine auf, in der die Innenausbauvorrichtung angeordnet ist. Die Innenausbauvorrichtung bildet zumindest einen Teil der Wohnkabine aus. Die Innenausbauvorrichtung umfasst neben den im Folgenden beschriebenen Elementen auch weitere, dem Fachmann bekannte Elemente, die den Innenausbau eines Wohnmobils definieren. Die Innenausbauvorrichtung weist einen Kabinenboden 10 auf.

Der Kabinenboden 10 bildet einen Fußboden der Wohnkabine aus. Dabei ist der Kabinenboden 10 im Wesentlichen eben ausgebildet.

Die Innenausbauvorrichtung weist weiter einen ersten hochgelegenen Bettbereich 12 auf. Die Innenausbauvorrichtung weist weiter einen zweiten hochgelegenen Bettbereich 14 auf. Die hochgelegenen Bettbereiche 12, 14 sind dabei zumindest teilweise voneinander getrennt ausgebildet. Die Bettbereiche 12, 14 weisen jeweils ein Komfortelement 16, 18 auf. Die Komfortelemente 16, 18 bilden jeweils eine Liegefläche 68, 70 des jeweiligen Bettbereichs 12, 14 aus. Die Komfortelemente 16, 18 sind dabei jeweils als Matratzen ausgebildet. Dabei sind die Komfortelemente 16, 18 zur Ausbildung der hochgelegenen Bettbereiche 12, 14 beabstandet von dem Kabinenboden 10 angebracht. Die Bettbereiche 12, 14, weisen jeweils einen Unterbau 20, 22 auf, der auf dem Kabinenboden 10 befestigt ist. Der Unterbau 20, 22 weist jeweils ein nicht näher dargestelltes Gestell auf, das eine tragende Struktur des jeweiligen Unterbaus 20, 22 ausbildet und Kräfte von dem Komfortelement 16, 18 in den Kabinenboden 10 ableitet. Der Unterbau 20, 22 weist jeweils eine Verkleidung 24, 26 auf, die den jeweiligen Unterbau 20, 22 in Richtung des Innenraums der Wohnkabine abschließt. Dabei ist es denkbar, dass das Gestell und die Verkleidung 24, 26 zumindest teilweise einstückig miteinander ausgebildet sind. Des Weiteren ist das auch denkbar, dass in den Unterbau 20, 22 jeweils noch zusätzliche Funktionselemente und/oder Aufbewahrungsmodule eingebracht sind.

In einem Kopfbereich 28 sind die Bettbereiche 12, 14 über einen Verbindungsbereich 30 miteinander verbunden. Der Verbindungsbereich 30 weist dabei eine Länge auf, die in etwa 1/3 einer Länge der Bettbereiche 12, 14 entspricht. Grundsätzlich ist es auch denk-bar, dass der Verbindungsbereich 30 eine Länge aufweist, die kleiner oder größer ist als 1/3 der Länge der Bettbereiche 12, 14. In dem Verbindungsbereich 30 ist ein weiteres Komfortelement 32 angeordnet, welches zusammen mit den Komfortelementen 16, 18 eine zusammenhängende Liegefläche 68, 70 ausbildet. Dabei bilden die Komfortelemente 16, 18 der Bettbereiche 12, 14 und das Komfortelement 32 des Verbindungsbereichs 30 eine U-förmige Liegefläche 68, 70 aus. In einem Bereich außerhalb des Kopfbereichs 28 sind die beiden Bettbereiche 12, 14 und dadurch die Komfortelemente 16, 18 durch einen Gangbereich 34 voneinander getrennt. Der Gangbereich 34 wird dabei von dem Kabinenboden 10 ausgebildet. Der Gangbereich 34 weist dabei eine Breite auf die einer Breite des Verbindungsbereichs 30 entspricht. Über den Gangbereich 34 sind die beiden Bettbereiche 12, 14 zugänglich.

Die Innenausbauvorrichtung umfasst ein Stufenmodul 36, Das Stufenmodul 36 ist dazu vorgesehen, eine erhöhte Trittfläche für eine Person bereitzustellen. Die erhöhte Trittfläche kann dabei von einer Person insbesondere dazu genutzt werden, einfach auf die Komfortelemente 16, 18 der erhöhten Bettbereiche 12, 14 zu gelangen. Das Stufenmodul 36 ist in dem Gangbereich 34 angeordnet. Dabei weist das Stufenmodul 36 eine Breite auf, die der Breite des Gangbereichs 34 entspricht. Das Stufenmodul 36 ist insbesondere an einem dem Kopfbereich 28 zugewandten Ende des Gangbereichs 34 angeordnet. Das Stufenmodul 36 weist zwei Trittstufen 38, 40 auf. Grundsätzlich ist es auch denkbar, dass das Stufenmodul 36 lediglich eine oder mehr als zwei Trittstufen 38, 40 aufweist. Die einzelnen Trittstufen 38, 40 des Stufenmoduls 36 weisen dabei jeweils eine gleiche Höhe auf. Das Stufenmodul 36 weist weiter eine Rückwand 42 auf, die das Stufenmodul 36 hinter der obersten Trittstufe 40 begrenzt. In die Rückwand 42 können dabei beispielsweise Lüftungsöffnungen für eine Klimatisierung oder andere Funktionselemente eingebracht sein. Die Innenausbauvorrichtung weist ein seitliches Wandelement 44 auf, das mit dem Stufenmodul 36 verbunden ist. Das seitliche Wandelement 44 ist an einer Seite der Trittstufen 38, 40 angeordnet. Das seitliche Wandelement 44 erstreckt sich über das Stufenmodul 36. Das Wandelement 44 erstreckt sich, von dem Kabinenboden 10 aus gesehen, bis über die Trittstufen 38, 40 hinaus. Das Wandelement 44 weist dabei eine Höhe auf, die größer ist als eine Höhe der Trittstufen 38, 40 des Stufenmoduls 36. Das Wandelement 44 weist dabei ungefähr eine Höhe der Rückwand 42 des Stufenmoduls 36 auf. Das Wandelement 44 ist starr mit dem Stufenmodul 36 verbunden. Das Wandelement 44 weist ein Handgriffelement 46 auf, über das eine Person das Wandelement 44 einfach ergreifen kann. Über das Handgriffelement 46 kann eine Person das Stufenmodul 36 einfach ergreifen.

Das Stufenmodul 36 ist beweglich gelagert. Das Stufenmodul 36 ist in dem Gangbereich 34 verschiebbar gelagert. Durch die verschiebbare Lagerung des Stufenmoduls 36 kann das Stufenmodul 36 zwischen zwei verschiedenen Aufstiegspositionen verstellt werden. Grundsätzlich ist es auch denkbar, dass das Stufenmodul 36 zwischen mehr als zwei unterschiedlichen Aufstiegspositionen verschiebbar bewegbar ist. Das Stufenmodul 36 weist eine nicht näher dargestellte Lagervorrichtung auf, mittels der das Stufenmodul 36 in dem Gangbereich 34 gelagert ist. Die Lagervorrichtung weist mehrere Rollenelemente auf, mittels derer das Stufenmodul 36 auf dem Kabinenboden 10 aufsteht und in dem Gangbereich 34 verschoben werden kann. Grundsätzlich ist es auch denkbar, dass die Lagervorrichtung andere, dem Fachmann als sinnvoll erscheinende Lagerelemente aufweist, wie beispielsweise Lagerschienen, die sowohl in dem Stufenmodul 36 als auch in dem Kabinenboden 10 in dem Gangbereich 34 angeordnet sind. Die Lagervorrichtung weist weiter zwei korrespondierend zueinander ausgebildete Führungselemente auf, entlang denen das Stufenmodul 36 zu dem Kabinenboden 10 in dem Gangbereich 34 geführt ist. Ein Führungselement ist dabei fest mit dem Stufenmodul 36 verbunden und das korrespondierend ausgebildete Führungselement ist fest mit dem Kabinenboden 10 oder einem Teil des Bettbereichs 12, 14 verbunden. Die Führungselemente sind dabei als Führungsschienen mit jeweils zwei Endanschlägen ausgebildet. Grundsätzlich ist es auch denkbar, dass die Führungselemente als eine Nut und ein in die Nut eingreifender Stift ausgebildet sind. Über die Führungselemente ist eine Bewegung des Stufenmoduls 36 zu dem Kabinenboden 10 begrenzt.

Das Stufenmodul 36 ist in dem Gangbereich 34 zwischen einer eingefahrenen Stellung und einer ausgefahrenen Stellung relativ zu den Bettbereichen 12, 14 verschiebbar. In der eingefahrenen Stellung nimmt das Stufenmodul 36 den geringsten Platz in dem Gangbereich 34 ein. In der eingefahrenen Stellung ist das Stufenmodul 36 in einer maximal an den Kopfbereich 28 herangefahrenen Position angeordnet. Die Rückwand 42 des Stufenmoduls 36 ist in der eingefahrenen Stellung des Stufenmoduls 36 in einer Ebene mit einem vorderen Ende des Kopfbereichs 28. Dadurch ist das Stufenmodul 36 in der eingefahrenen Stellung unmittelbar an den Verbindungsbereich 30 angrenzend. In der ausgefahrenen Stellung ist das Stufenmodul 36 aus der eingefahrenen Stellung von dem Kopfbereich 28 wegbewegt. Bei einer Verstellung des Stufenmoduls 36 von der eingefahrenen Stellung in die ausgefahrene Stellung wird das Stufenmodul 36 über die Lagervorrichtung in dem Gangbereich 34 von dem Kopfbereich 28 wegbewegt. Das Stufenmodul 36 wird bei einer Verstellung zwischen der eingefahrenen Stellung und der ausgefahrenen Stellung um 500 mm verschoben. Dabei wird das Stufenmodul 36 mittels der Lagevorrichtung linear zwischen der eingefahrenen Stellung und der ausgefahrenen Stellung verschoben.

Die Innenausbauvorrichtung umfasst ein Verriegelungsmodul 48, über das das Stufenmodul 36 in der eingefahrenen Stellung und der ausgefahrenen Stellung betriebssicher verriegelbar ist. Grundsätzlich ist es auch denkbar, dass das Verriegelungsmodul 48 das Stufenmodul 36 in weiteren Zwischenstellungen zwischen der eingefahrenen und der ausgefahrenen Stellung verriegeln kann. Grundsätzlich ist es auch denkbar, dass das Verriegelungsmodul 48 zu einer stufenlosen Verriegelung vorgesehen ist und das Stufenmodul 36 in jeder beliebigen Stellung verriegeln kann. Das Verriegelungsmodul 48 weist zur Verriegelung des Stufenmoduls 36 in der eingefahrenen Stellung und der ausgefahrenen Stellung jeweils nicht näher dargestellte Formschlusselemente auf, die in dem Kabinenboden 10 angeordnet sind. Grundsätzlich wäre es auch denkbar, dass diese Formschlusselemente beispielsweise in der Verkleidung 24, 26 der Bettbereiche 12, 14 fest integriert sind. Die Formschlusselemente sind dabei als Ausnehmungen ausgebildet. Grundsätzlich ist es auch denkbar, dass die Formschlusselemente als Haken oder Rastelemente ausgebildet sind. Das Verriegelungsmodul 48 weist fest mit dem Stufenmodul 36 verbundene, korrespondierend zu den Formschlusselementen in dem Kabinenboden 10 ausgebildete Formschlusselemente auf, die ebenfalls nicht näher dargestellt sind. In der eingefahrenen Stellung des Stufenmoduls 36 sind die Formschlusselemente des Stufenmoduls 36 mit den jeweiligen Formschlusselementen, die in dem Kabinenboden 10 integriert sind, formschlüssig verbunden. Dadurch ist das Stufenmodul 36 über die entsprechenden Formschlusselemente des Verriegelungsmoduls 48 in der eingefahrenen Stellung verriegelt. In der ausgefahrenen Stellung des Stufenmoduls 36 sind die Formschlusselemente des Stufenmoduls 36 mit den anderen jeweiligen Formschlusselementen, die in dem Kabinenboden 10 integriert sind, formschlüssig verbunden. Dadurch ist das Stufenmodul 36 über die entsprechenden Formschlusselemente des Verriegelungsmoduls 48 in der ausgefahrenen Stellung verriegelt. Das Verriegelungsmodul 48 weist ein Betätigungselement 50 auf. Das Betätigungselement 50 ist an dem seitlichen Wandelement 44 angebracht. Das Betätigungselement 50 ist dabei in einem Bereich des Handgriffelements 46 angebracht. Dadurch kann eine Person das Betätigungselement 50 betätigen, während sie das Handgriffelement 46 hält. Das Betätigungselement 50 ist dazu vorgesehen, das Stufenmodul 36 zu entriegeln. Das Betätigungselement 50 ist dabei als ein Kipphebel ausgebildet. Grundsätzlich ist es auch denkbar, dass das Betätigungselement 50 als ein anderes, dem Fachmann als sinnvoll erscheinendes Element ausgebildet ist, wie beispielsweise ein Drehknopf, ein Zug- oder Druckelement. Das Betätigungselement 50 ist mechanisch mit einem Entriegelmechanismus des Verriegelungsmoduls 48 gekoppelt. Wird das Betätigungselement 50 bedient, entriegelt der Entriegelmechanismus das Stufenmodul 36, indem es die entsprechenden formschlüssig miteinander verbundenen Formschlusselemente des Verriegelungsmoduls 48 voneinander trennt. Ist das Stufenmodul 36 über das Betätigungselement 50 entriegelt, kann das Stufenmodul 36 zwischen der eingefahrenen und der ausgefahrenen Stellung verschoben werden. Grundsätzlich ist es auch denkbar, dass das Betätigungselement 50 als ein elektrischer oder elektronischer Schalter ausgebildet ist, der einen elektrischen und/oder elektronischen Entriegelmechanismus des Verriegelungsmoduls 48 ansteuert.

Die Innenausbauvorrichtung umfasst ein Betterweiterungselement 52. Das Betterweiterungselement 52 ist dazu vorgesehen, die Bettbereiche 12, 14 miteinander zu verbinden. Das Betterweiterungselement 52 ist dazu vorgesehen, zusammen mit den Bettbereichen 12, 14 und dem Verbindungsbereich 30 eine gemeinsame vergrößerte Liegefläche 68, 70 bereitzustellen. In einer Gebrauchsstellung ist das Betterweiterungselement 52 dazu vorgesehen, die Bettbereiche 12, 14 in dem Gangbereich 34 teilweise miteinander zu verbinden und die Liegefläche 68, 70 zu erweitern. In einer Verstaustellung ist das Betterweiterungselement 52 dazu vorgesehen, von den Bettbereichen 12, 14 getrennt zu werden, um so den gesamten Gangbereich 34 freizugeben. Das Betterweiterungselement 52 ist als ein zusätzliches, separates Element ausgebildet. Das Betterweiterungselement 52 weist dabei eine Halteplatte 56 und ein auf der Halteplatte 56 aufbringbares Komfortelement 54 auf. Das Betterweiterungselement 52 weist eine Breite auf, die der Breite des Gangbereichs 34 entspricht. Das Betterweiterungselement 52 weist eine Länge von 500 mm auf. Dadurch können die beiden Bettbereiche 12, 14 über das Betterweiterungselement 52 in zusätzlichen 500 mm miteinander verbunden werden. Das Betterweiterungselement 52 ist dazu vorgesehen, zumindest teilweise auf dem Stufenmodul 36 gelagert zu werden. Zur Anbindung des Betterweiterungselements 52 ist die Halteplatte 56 mit dem Stufenmodul 36 gekoppelt. Die Halteplatte 56 ist an einem oberen Ende der Rückwand 42 des Stufenmoduls 36 angeordnet. Die Halteplatte 56 liegt dabei auf dem oberen Ende der Rückwand 42 auf. In einer eingefahrenen Stellung des Stufenmoduls 36 und einer Verstaustellung des Betterweiterungselements 52 ist die Halteplatte 56 unterhalb des Verbindungsbereichs 30 verstaut. Grundsätzlich ist es auch denkbar, dass die Halteplatte 56 in der Verstaustellung von den Bettbereichen 12, 14 komplett getrennt wird und in einem separaten Staufach untergebracht wird. Die Halteplatte 56 ist dabei mit einem dem Verbindungsbereich 30 zugewandten ersten Ende mit einem Unterbau des Verbindungsbereichs 30 gekoppelt. Grundsätzlich ist es auch denkbar, dass die Halteplatte 56 zusätzlich oder ausschließlich an zumindest einem der beiden Unterbaue 20, 22 der Bettbereiche 12, 14 befestigt ist. In der Gebrauchsstellung ist die Halteplatte 56 unter dem Verbindungsbereich 30 herausbewegt und ragt in den Gangbereich 34. Dabei ragt die Halteplatte 56, von dem Verbindungsbereich 30 aus gesehen, ca. 500 mm in den Gangbereich 34 hinein. Die Halteplatte 56 bildet eine Auflagefläche für das Komfortelement 54 in dem Gangbereich 34. Die Halteplatte 56 wird bei einer Verstellung des Stufenmoduls 36 von der eingefahrenen Stellung in die ausgefahrene Stellung automatisch mitgenommen und von ihrer Verstaustellung in die Gebrauchsstellung verstellt. Dadurch kann die Halteplatte 56 des Betterweiterungselements 52 vorteilhaft einfach durch Verstellung des Stufenmoduls 36 über das Handgriffelement 46 an dem Wandelement 44 in ihre Gebrauchsstellung gebracht werden. Ist die Halteplatte 56 über das Handgriffelement 46 zusammen mit dem Stufenmodul 36 in die Gebrauchsstellung gebracht worden, kann das Komfortelement 54 zur Ausbildung der erweiterten Liegefläche auf die Halteplatte 56 aufgelegt werden. Durch die Verstellung des Stufenmoduls 36 während der Verstellung des Betterweiterungselements 52 in die Gebrauchsstellung sind die Trittstufen 38, 40 in dem Teil des Gangbereichs 34 angeordnet, der nicht von dem Betterweiterungselement 52 verdeckt ist. Dadurch ist ein Aufstieg auf die hochgelegenen Bettbereiche 12, 14 auch in einem Zustand, in dem das Betterweiterungselement 52 in seiner Gebrauchsstellung ist, für eine Person über das Stufenmodul 36 möglich.

Ist das Betterweiterungselement 52 in seiner Gebrauchsstellung, kann das Stufenmodul 36, insbesondere wenn es nicht benötigt wird, wieder in seine eingefahrene Stellung gebracht werden. Dabei bleibt das Betterweiterungselement 52 in seiner Gebrauchsstellung. Dadurch kann das Stufenmodul 36 unter dem Betterweiterungselement 52 verstaut werden und der Teil des Gangbereichs 34, in dem das Stufenmodul 36 zum erleichterten Aufstieg auf die Bettbereiche 12, 14 mit dem Betterweiterungselement 52 herausgefahren wurde, kann wieder freigegeben werden. Der Gangbereich 34 bildet einen Schrankbereich 58 aus. Der Schrankbereich 58 ist ein Bereich des Gangbereichs 34, in dem Bauteile eines Schranks oder eines Staufachs, wie insbesondere eine Schublade oder eine schwenkbare Tür, in einem geöffneten Zustand hineinragen. In dem Unterbau 20 und dem Unterbau 22 der Bettbereiche 12, 14 sind Staubereiche 60, 62 angeordnet, deren Türen 64, 66 schwenkbar gelagert sind und in geöffneten Zustand in den Schrankbereich 58 des Gangbereichs 34 hineinragen. Dadurch, dass das Stufenmodul 36 auch in seine eingefahrene Stellung gebracht werden kann während das Betterweiterungselement 52 in seiner Gebrauchsstellung ist, sind die Staubereiche 60, 62 auch zugänglich, wenn das Betterweiterungselement 52 in der Gebrauchsstellung ist.

## Patentansprüche

1. Innenausbauvorrichtung, insbesondere für ein Wohnmobil, mit zumindest einem hochgelegenem Bettbereich (12, 14) und wenigstens einem an dem zumindest einen Bettbereich (12, 14) grenzenden Gangbereich (34), und mit einem Stufenmodul (36), das zumindest teilweise in dem Gangbereich (34) angeordnet und dazu vorgesehen ist, zumindest eine erhöhte Trittfläche zum Aufstieg in den Bettbereich (12, 14) bereitzustellen, wobei zumindest ein Teil des Stufenmoduls (36) zur Erzielung von zumindest zwei verschiedenen Aufstiegspositionen beweglich gelagert ist, **gekennzeichnet durch** zumindest ein Betterweiterungselement (52), das dazu vorgesehen ist, zwischen einer Verstaustellung und einer Gebrauchsstellung verstellt zu werden, und bei einer Verstellung des Stufenmoduls (36) in eine ausgefahrene Stellung zumindest teilweise mitgenommen zu werden, wobei das Stufenmodul (36) dazu vorgesehen ist, in eine eingefahrene Stellung verfahren zu werden, während das Betterweiterungselement (52) in der Gebrauchsstellung angeordnet ist.

2. Innenausbauvorrichtung nach Anspruch 1,
**dadurch gekennzeichnet, dass**
das Stufenmodul (36) zumindest in dem Gangbereich (34) zumindest zwischen der eingefahrenen Stellung und der ausgefahrenen Stellung relativ zu dem Bettbereich (12, 14) verschiebbar ist.

3. Innenausbauvorrichtung nach Anspruch 1 oder 2,
**dadurch gekennzeichnet, dass**
das Stufenmodul (36) dazu vorgesehen ist, linear verschoben zu werden.

4. Innenausbauvorrichtung zumindest nach Anspruch 2,
**dadurch gekennzeichnet, dass**
das Stufenmodul (36) dazu vorgesehen ist, zwischen der eingefahrenen Stellung und der ausgefahrenen Stellung um zumindest 100 mm verschoben zu werden.

5. Innenausbauvorrichtung nach einem der vorhergehenden Ansprüche, **gekennzeichnet durch**
zumindest ein mit dem Stufenmodul (36) verbundenes seitliches Wandelement (44), das sich über das Stufenmodul (36) erstreckt und das zumindest ein Handgriffelement (46) aufweist, über welches das Stufenmodul (36) verschiebbar ist.

6. Innenausbauvorrichtung zumindest nach Anspruch 2,
**gekennzeichnet durch**
zumindest ein Verriegelungsmodul (48), über das das Stufenmodul (36) zumindest in der eingefahrenen Stellung und der ausgefahrenen Stellung betriebssicher verriegelbar ist.

7. Innenausbauvorrichtung nach Anspruch 5 und 6,
**dadurch gekennzeichnet, dass**
das Verriegelungsmodul (48) wenigstens ein Betätigungselement (50) zur Entriegelung des Stufenmoduls (36) aufweist, das an dem seitlichen Wandelement (44) angebracht ist.

8. Innenausbauvorrichtung nach einem der vorhergehenden Ansprüche,
**dadurch gekennzeichnet, dass**
der Gangbereich (34) einen Schrankbereich (58) ausbildet, in den das Stufenmodul (36) in der eingefahrenen Stellung nicht hineinragt.

9. Wohnfahrzeug, insbesondere Wohnmobil, mit einer Innenausbauvorrichtung nach einem der vorhergehenden Ansprüche.

## Claims

1. Interior construction device, in particular for a mobile home, with at least one bed region (12, 14) in an elevated situation and at least one alleyway region (34) bordering on the at least one bed region (12, 14), and with a step module (36) that is arranged at least partly in the alleyway region (34) and is configured to provide at least one elevated tread surface for an ascent to the bed region (12, 14),
at least a portion of the step module (36) being supported movably to achieve at least two different ascent positions,
**characterized by** at least one bed-enlargement element (52) which is configured to be adjusted between a stowage position and a use position, and to be at least partly taken along during an adjustment of the step module (36) into a deployed position, wherein the step module (36) is configured to be traversed into a retracted position while the bed-enlargement element (52) is arranged in the use position.

2. Interior construction device according to claim 1,
**characterised in that** the step module (36) is displaceable relative to the bed region (12, 14) at least between the retracted position and the deployed position, at least in the alleyway region (36).

3. Interior construction device according to claim 1 or 2,
**characterised in that** the step module (36) is configured to be displaced linearly.

4. Interior construction device at least according to claim 2,
**characterised in that** the step module (36) is configured to be displaced by at least 100 mm between the retracted position and the deployed position.

5. Interior construction device according to one of the preceding claims,
**characterised by** a lateral wall element (44) which is connected with the step module (36), extending over the step module (36) and comprising at least one handle element (46) by means of which the step module (36) is displaceable.

6. Interior construction device at least according to claim 2,
**characterised by** at least one locking module (48), via which the step module (36) is lockable in an operationally safe manner at least in the retracted position and in the deployed position.

7. Interior construction device according to claims 5 and 6,
**characterised in that** the locking module (48) comprises at least one operation element (50) for an unlocking of the step module (36), which is attached to the lateral wall element (44).

8. Interior construction device according to one of the preceding claims,
**characterised in that** the alleyway region (34) forms a cupboard region (58), which the step module (36) does not project into in the retracted position.

9. A habitation vehicle, in particular a mobile home, with an interior construction device according to one of the preceding claims.

## Revendications

1. Dispositif d'aménagement intérieur, en particulier pour un camping-car, avec au moins une zone de lit élevée (12, 14) et au moins une zone couloir (34) bordant l'au moins une zone de lit (12, 14), et avec au moins un module à échelon (36) disposé au moins partiellement dans la zone couloir (34) et prévu pour fournir au moins une surface giron élevée pour une montée à la zone de lit (12, 14),
au moins un composant du module à échelon (36) étant supporté d'une façon mobile pour achever au moins deux positions de montée différentes,
**caractérisé par** au moins un élément d'élargissement de lit (52) configuré à être ajusté entre une position de rangement et une position d'usage et à être au moins partiellement emmené en un ajustement du module à échelon (36) dans une position sortie,
le module à échelon (36) étant configuré à être traversé dans une position rétractée pendant que l'élément d'élargissement de lit (52) est disposé dans la position d'usage.

2. Dispositif d'aménagement intérieur selon la revendication 1,
**caractérisé en ce que** le module à échelon (36) est déplaçable par rapport à la zone de lit (12, 14) au moins dans la zone couloir (34) au moins entre la position rétractée et la position sortie.

3. Dispositif d'aménagement intérieur selon la revendication 1 ou 2,
**caractérisé en ce que** le module à échelon (36) est configuré pour un déplacement linéaire.

4. Dispositif d'aménagement intérieur au moins selon la revendication 2,
**caractérisé en ce que** le module à échelon (36) est configuré pour être déplacé par au moins 100 mm entre la position rétractée et la position sortie.

5. Dispositif d'aménagement intérieur selon l'une quelconque des revendications précédentes,
**caractérisé par** au moins un élément latéral de paroi (44) qui est raccordé avec le module à échelon (36), s'étendant au-delà du module à échelon (36) et comportant au moins un élément de poignée (46), par le biais duquel le module à échelon (36) est déplaçable.

6. Dispositif d'aménagement intérieur au moins selon la revendication 2,
**caractérisé par** au moins un module de verrouillage (48), par le biais duquel le module à échelon (36) peut être verrouillé, d'une manière de fonctionnement sûr, au moins dans la position rétractée et dans la position sortie.

7. Dispositif d'aménagement intérieur selon les revendications 5 et 6,
**caractérisé en ce que** le module de verrouillage (48) comporte au moins un élément d'actionnement (50) pour un déverrouillage du module à échelon (36), lequel est attaché à l'élément latéral de paroi (44).

8. Dispositif d'aménagement intérieur selon l'une quelconque des revendications précédentes,
**caractérisé en ce que** la zone couloir (34) forme une zone armoire (58), le module à échelon (36) ne pas projetant dans ladite zone armoire (58) dans la position rétractée.

9. Véhicule de logement, en particulier camping-car, avec un dispositif d'aménagement intérieur selon l'une quelconque des revendications précédentes.
